Europäisches Patentamt

European Patent Office

Office européen des brevets

(19)

(11) Veröffentlichungsnummer : **0 146 768**
**B1**

(12) **EUROPÄISCHE PATENTSCHRIFT**

(45) Veröffentlichungstag der Patentschrift :
01.02.89

(21) Anmeldenummer : 84113859.7

(22) Anmeldetag : 16.11.84

(51) Int. Cl.⁴ : **G 01 J 3/453**, G 01 B 9/02,
G 01 J 3/28

(54) Interferometer.

(30) Priorität : 22.12.83 DE 3346455
23.08.84 DE 3431040

(43) Veröffentlichungstag der Anmeldung :
03.07.85 Patentblatt 85/27

(45) Bekanntmachung des Hinweises auf die Patenter-
teilung : 01.02.89 Patentblatt 89/05

(84) Benannte Vertragsstaaten :
DE FR GB IT NL SE

(56) Entgegenhaltungen :
EP--A-- 0 034 325
DE--A-- 2 814 006
GB--A-- 2 014 754
OPTIK, Band 68, Nr. 3, Oktober 1984, Seiten 217-223,
Wissenschaftliche Verlagsgesellschaft mbH, Stutt-
gart, DE; K. KÖRNER: "Ein neues Interferometer für
die Fourier-Spektroskopie"
AIR FORCE CAMBRIDGE RESEARCH LABORATO-
RIES, Nr. 114, 5. Januar 1971, Seiten 43-53; W.H.
STEEL: "Interferometers for fourier spectroscopy"
APPLIED SPECTROSCOPY, Band 34, Nr. 5, 1980,
Seiten 599-603; W.M. DOYLE et al.: "Refranctively
scanned interferometers for fourier transform infra-
red spectrophotometry"

(73) Patentinhaber : **Deutsche Forschungs- und Ver-
suchsanstalt für Luft- und Raumfahrt e.V.
D-5300 Bonn (DE)**

(72) Erfinder : **Tank, Volker, Dipl.-Ing.
Stegenerstrasse 4
D-8088 Eching a.A. (DE)**

(74) Vertreter : **von Kirschbaum, Albrecht, Dipl.-Ing.
Hermann-Ehlers-Strasse 21a
D-8034 Germering (DE)**

EP 0 146 768 B1

## Beschreibung

Die Erfindung betrifft Interferometer nach dem Michelsonprinzip. Interferometer dieser Art werden in einem breiten Bereich des Spektrums der elektromagnetischen Strahlung zur Spektroskopie eingesetzt ; als Beispiele seien die Spektralanalyse in der Chemie und die Astronomie (beispielsweise im Infraroten) genannt.

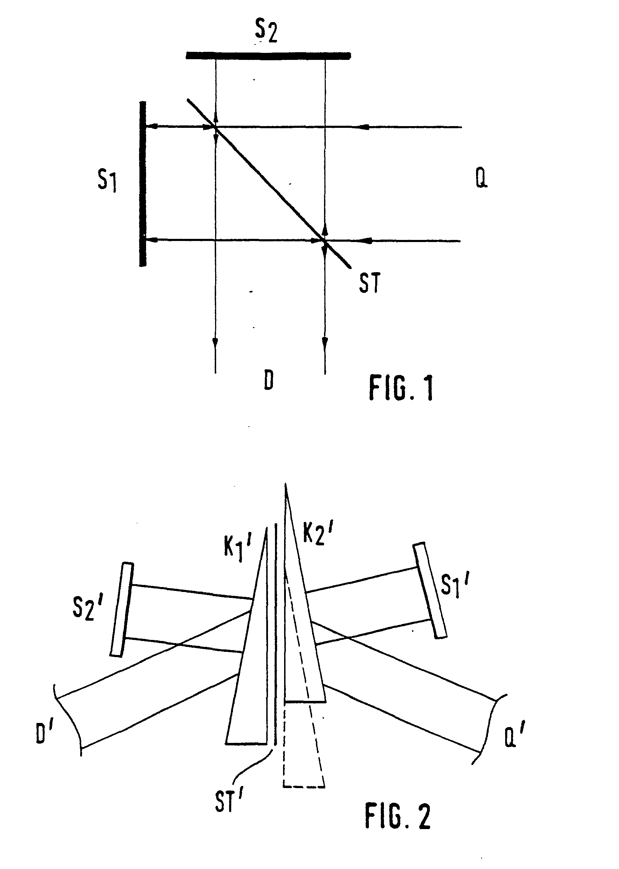

Prinzipiell weisen Interferometer nach Michelson gemäß Fig. 1 zwei senkrecht zueinander stehende Planspiegel S1 und S2, von denen der eine Spiegel S1 ortsfest ist, und der andere Spiegel S2 parallel verschiebbar ist, und einen Strahlteiler ST auf, der einen Winkel von 45° mit beiden Spiegeln S1 und S2 bildet, und die Wellenzüge der von einer Strahlungsquelle Q einfallenden Strahlung in amplitudengleiche Hälften teilt, deren eine Hälfte (hier) zu dem festen Spiegel S1 durchgelassen wird und deren andere Hälfte zu dem beweglichen Spiegel S2 reflektiert wird. Von beiden Spiegeln S1 und S2 reflektiert, rekombinieren die Strahlungshälften am Strahlteiler ST und gelangen zu einem Detektor D.

Ist der optische Weg durch beide Interferometerarme (mit den Spiegeln S1 und S2) gleich lang, so überlagern sich die Strahlungshälften positiv und führen zu einem großen Detektorsignal ; ist durch Verschieben des beweglichen Spiegels der optische Weg um z. B. $\lambda_{s/2}$ einer bestimmten Wellenlänge $\lambda_s$ unterschiedlich, so überlagern sich die Hälften der Strahlung der Wellenlänge $\lambda_s$ negativ ; sie löschen sich dann aus und der Detektor empfängt keine Strahlung der Wellenlänge $\lambda_s$. Bei kontinuerlicher Spiegelbewegung über einen optischen Weg von vielen Wellenlängen wechseln für alle Wellenlängen $\lambda_n$ der einfallenden Strahlung Addition, Auslöschung und alle Zwischenstufen kontinuierlich entsprechend $\lambda_n$. Das dabei erhaltene Detektorsignal (nämlich das Interferogramm) ist die Fouriertransformierte des Spektrums der einfallenden Strahlung ; durch eine Digitalisierung und Fouriertransformation in einem elektronischen Rechner wird aus dem Interferogramm das Spektrum errechnet.

Das spektrale Auflösungsvermögen eines Interferometers ist proportional der Wegdifferenz seiner Arme ; je weiter also der bewegliche Spiegel bewegt wird, desto größer ist das Auflösungsvermögen des Geräts.

Bei diesen bekannten Interferometern nach Michelson, oder Abwandlungen davon wird die notwendige Wegdifferenz immer durch eine mechanische Vor- und Rückbewegung eines oder auch beider Interferometerspiegel erzeugt. Beispielsweise wird der Spiegel mit Hilfe eines Schiebeschlittens (gelegentlich auch unter Verwendung dispersiver Komponenten) oder auch eines Pendels bewegt, wobei für aufeinanderfolgende Messungen der Spiegel ständig hin- und herbewegt werden muß. Die Notwendigkeit der Hin- und Herbewegung begrenzt die erreichbare Meßgeschwindigkeit und damit die Zeitauflösung des Geräts. Ferner kann im allgemeinen das Spektrometer während des Spiegelrücklaufs nicht zur Messung verwendet werden, da beim Anhalten und Umkehren des Spiegels die Information über die Spiegelposition verloren geht. Die Spiegelposition wird meist interferometrisch mit Hilfe eines Lasers bestimmt, und ihre Kenntnis ist unerläßlich für die Durchführung der Fouriertransformation (und auch schon für die Digitalisierung des Interferogramms). Das bedeutet aber, daß wirklich kontinuierliche Messungen nicht möglich sind, sondern nur periodisch Abschnitte eines Zeitablaufs erfaßt werden können.

Da während einer Messung (also insbesondere während der Spiegelbewegung) die beiden Interferometerspiegel ständig exakt senkrecht zueinander stehen müssen, werden hohe Anforderungen an die Mechanik der Spiegelführung gestellt, was — insbesondere bei großen Spiegelhüben (bei hoher spektraler Auflösungskraft) und/oder kleinen zu messenden Wellenlängen — einen großen Aufwand bedeutet.

Ferner sind Interferometer mit brechenden Elementen bekannt, bei welchen ein Wegunterschied durch ein Hin- und Herbewegen eines Keils oder zweier Keile bzw. eines Prismas oder zweier Prismen in einem Arm oder in beiden Armen des Interferometers erzeugt wird. In Fig. 2 ist der prinzipielle Aufbau eines solchen Interferometers dargestellt, dessen beide ortsfesten Spiegel S1' und S2' als Planspiegel oder als Tripelspiegel (Rückstrahler) ausgebildet sein können. Mit K1' und K2' sind zwei identische Keile (oder Prismen) bezeichnet, die aus einem Material hergestellt sind, welches einen Brechungsindex $n_K$ hat, der ungleich dem Brechungsindex von Luft ist. Mit ST' ist wieder ein Strahlteiler bezeichnet, der als Beschichtung auf der Rückseite eines der Keile K1' oder K2' aufgebracht sein kann oder der zwischen den beiden einander gegenüberliegenden Flächen der Keile K1' oder K2' angeordnet ist. Die Strahlung der Strahlungsquelle Q' wird zur Interferenz gebracht und mit dem Detektor D' wird die interferierende Strahlung gemessen.

Bei diesem Interferometer ist der optische Weg durch die beiden Interferometerarme dann gleich, wenn die Abstände von den festen Spiegeln S1' bzw. S2' jeweils zu dem Strahlteiler ST' gleich sind und gleichzeitig die beiden Keile K1' und K2' nicht gegeneinander verschoben sind, d. h. spiegelsymmetrisch zu dem Strahlteiler ST' angeordnet sind. Wird nunmehr einer der Keile, beispielsweise der Keil K2', wie in Fig. 2 gestrichelt angedeutet ist, entlang dem Strahlteiler beispielsweise in Richtung zur Keilspitze verschoben, dann durchläuft die Strahlung in beiden Armen des Interferometers unterschiedlich lange Wege durch die Luft und das Keilmaterial ; hierdurch ergeben sich dann unterschiedliche optische Wege, solange der Brechungsindex $n_K$ des Keilmaterials ungleich dem Brechungsindex $n_L$ von Luft ist. Somit können durch Hin- und Herbewegen einer der Keile K1' und K2' in der beschriebenen Weise unterschiedliche optische Wege in den beiden Interferometerarmen erzeugt werden, ohne daß die geometrischen Wege verändert werden. Bei diesen Überlegungen ist davon ausgegangen, daß für den optischen Weg $d_o$ durch ein Material mit dem Brechungsindex n gilt :

$$d_o = n \cdot d_g$$

wobei $d_g$ der geometrische Weg ist.

Es sind verschiedene Ausführungen solcher Interferometer mit brechenden Elementen bekannt ; hierbei wird immer die Wegdifferenz durch ein Hin- und Herbewegen von einem oder mehreren optischen Elementen erzeugt (siehe bspw. EP-A-34 325). Diese Bewegung(en) muß (müssen) mit großer Präzision durchgeführt werden, weshalb ein großer Aufwand bei der Lagerung und dem Antrieb der bewegten Elemente erforderlich ist.

Entsprechend obigen Ausführungen wird daher neben dem notwendigen, verhältnismäßig großen Aufwand als Nachteil bei den gegenwärtigen zur Interferometrie in der Praxis verwendeten Verfahren und Vorrichtungen angesehen werden, daß

a) Hin- und Herbewegungen durchgeführt werden,

b) die Meßgeschwindigkeit deshalb begrenzt ist, und

c) zeitlich lückenlose Messungen nicht möglich sind.

Dies gilt vor allem deswegen, da die bewegten Elemente ständig abwechselnd beschleunigt und dann wieder zum Stillstand gebracht werden müssen. Als weiterer Nachteil wird angesehen, daß wegen der notwendigen Lagerung der bewegten Elemente im allgemeinen nur ein Betrieb des Interferometers in horizontaler Stellung möglich ist, zumindest aber ein Betrieb in beliebiger Lage nicht möglich ist.

Aufgabe der Erfindung ist es daher, ein Interferometer nach dem Michelsonprinzip unter möglichst weitgehender Vermeidung der genannten Nachteile und Schwierigkeiten derart zu verbessern, daß mit verringertem Aufwand zeitlich lückenlose und kontinuierliche Spektralmessungen mit sehr hoher Geschwindigkeit in jeder beliebigen Lage des Interferometers durchführbar sind, ohne daß Hin- und Herbewegungen erforderlich sind.

Diese Aufgabe wird bei einem Interferometer nach dem Oberbegriff des Anspruchs 1 oder 9 erfindungsgemäß durch den Gegenstand des Patentanspruchs 1 bzw. 9 gelöst. Vorteilhafte Weiterbildungen der Erfindung sind Gegenstand der abhängigen Ansprüche.

Nachfolgend wird die Erfindung unter Bezugnahme auf die anliegenden Zeichnungen anhand einer bevorzugten Ausführungsform im einzelnen erläutert. Es zeigen :

Fig. 1 eine schematische Schnittdarstellung eines herkömmlichen Interferometers ;

Fig. 2 eine weitere, schematische Schnittdarstellung eines herkömmlichen Interferometers mit brechenden Elementen ;

Fig. 3 eine schematische Schnittdarstellung einer bevorzugten Ausführungsform eines erfindungsgemäßen Interferometers ;

Fig. 4 eine schematische Schnittdarstellung einer weiteren, bevorzugten Ausführungsform eines Interferometers gemäß der Erfindung ;

Fig. 5 eine schematische Draufsicht auf die Ausführungsform der Fig. 4, und

Fig. 6 eine Draufsicht auf eine weitere Ausführungsform der Erfindung.

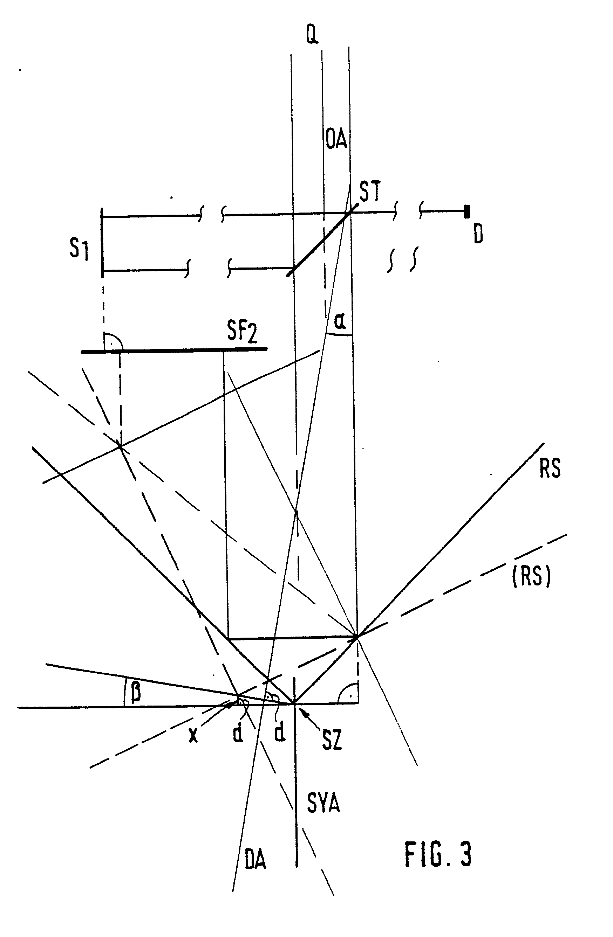

Bei einer bevorzugten Ausführungsform der Erfindung nach Fig. 3 ist neben dem festen Spiegel S1 noch ein zweiter fester Planspiegel SF2 vorgesehen und als beweglicher Spiegel des Interferometers ist ein Rückstrahler (Retroreflektor) RS verwendet, welcher so ausgebildet ist, daß er (mit einer gewünschten Geschwindigkeit) um seine Achse DA rotiert, wobei diese Achse zur optischen Achse OA des Interferometers seitlich versetzt ist ; außerdem sind die beiden Achsen DA und OA auch um einen Winkel α gegeneinander geneigt ; die Drehachse DA liegt dabei vorteilhafterweise in der Ebene, die durch die beiden Interferometerarme festgelegt ist. Der gestrichelt dargestellte Rückstrahler RS gibt den Rückstrahler RS lediglich in einer anderen Position der Drehbewegung wieder.

Darüber hinaus ist die Drehachse DA des Rückstrahlers RS auch zur Symmetrieachse SYA des Rückstrahlers RS seitlich versetzt und ist zu ihr in einem Winkel β geneigt (Fig. 3) ; Drehachse DA und Symmetrieachse SYA des Rückstrahlers RS sind also nicht parallel. Sowohl der seitliche Versatz der Drehachse DA zu den beiden Achsen (nämlich der optischen Achse OA des Interferometers und der Symmetrieachse SYA des Rückstrahlers) als auch die Neigung der Drehachse DA zur Symmetrieachse SYA des Rückstrahlers und auch zur optischen Achse OA des Interferometers, sowie die gesamte Konstruktion sind in ihrem Aufbau und in ihren Abmessungen so ausgeführt, daß in jeder Winkelstellung des rotierenden Rückstrahlers RS dessen eine Hälfte sich gegenüber dem Strahlteiler ST des Interferometers befindet und die von dort kommende Strahlung vollständig aufnimmt ; seine andere Hälfte muß sich dabei immer gegenüber dem zweiten festen Spiegel SF2 (Fig. 3) befinden, welcher vor allen Dingen die vom Rückstrahler RS in Richtung des festen Spiegels SF2 reflektierte Strahlung vollständig aufnimmt. Ferner muß der Spiegel SF2 zum ersten festen Spiegel S1 des Interferometers senkrecht stehen. Der übrige Teil des Interferometers kann in einer der bekannten Arten ausgeführt sein, z. B. als konventionelles Michelsoninterferometer (Fig. 1 zeigt dafür schematisch ein gesamtes Interferometer), oder in irgendeiner Abwandlung davon.

Bei einer vollständigen Drehung des Rückstrahlers RS bewirken Versatz und Neigung seiner Drehachse DA (bezogen auf die beiden anderen Achsen), daß sich die Weglänge x zwischen den festen Bezugspunkten (nämlich dem Strahlteiler ST und dem zweiten festen Spiegel SF2) ändert ; wenn beispielsweise von einer Winkelstellung ausgegangen wird, bei der die Weglänge die kürzeste ist, nimmt diese bis zu einem Maximum zu (das nach einer halben Umdrehung erreicht wird), und nimmt dann wieder bis zum Minimum ab (welches nach der vollen Umdrehung erreicht wird). Dieses Verhalten kommt durch die beschriebene Anordnung der drei Achsen, nämlich der optischen Achse OA des Interferometers, der Symmetrieachse SYA des Rückstrahlers und der Drehachse DA des Rückstrahlers, zustande, wodurch bewirkt wird, daß bei Drehung des Rückstrahlers RS dieser sowohl horizontal als auch vertikal gegenüber den festen Bezugsgrößen (ST und SF2) versetzt wird. Bei kontinuierlicher Rotation des Rückstrahlers RS ändert sich die Weglänge x daher kontinuierlich, wobei sie ständig zwischen Maximum und Minium wechselt.

Die Kombination aus dem Rückstrahler RS und dem zweiten festen Spiegel SF2 sorgt im übrigen dafür, daß die Strahlung in diesem Arm des Interferometers immer genau zu dem Punkt des Strahlteilers ST zurückkehrt, von dem sie gekommen ist. Ist mit α der Neigungswinkel zwischen Drehachse DA und Symmetrieachse SYA des Rückstrahlers RS und mit β der Neigungswinkel zwischen optischer Interferometerachse OA und Rückstrahlerdrehachse DA bezeichnet und ist α = β gewählt, so berechnet sich die maximale Wegdifferenz x zwischen dem zweiten festen Spiegel SF2 und dem Strahlteiler ST (zwischen den beiden extremen Rückstrahlerstellungen) nach der Gleichung

$$x = 2d \cdot \sin \alpha \qquad (1)$$

wobei d die seitliche Versetzung der Drehachse des Rückstrahlers RS zu seiner Symmetrieachse SYA ist (wobei vom Symmetriezentrum SZ senkrecht zur Drehachse gemessen ist und wobei das Symmetriezentrum SZ jener Punkt sein soll, der einen parallel zur Symmetrieachse SYA einfallenden Strahl in sich selbst zurückwirft). Nachdem die Strahlung die Interferometerarme zweimal durchläuft, ist damit die maximale optische Wegdifferenz

$$2x = 4d \cdot \sin \alpha \qquad (2)$$

Die beiden Arme des Interferometers (nämlich derjenige mit dem festen Spiegel S1 und derjenige mit dem rotierenden Rückstrahler RS) werden in bekannter Weise so aufeinander abgestimmt, daß der Weg durch beide Arme gleich lang ist, wenn der Weg im Arm mit dem rotierenden Rückstrahler RS minimal ist, bzw. der Arm mit dem festen Spiegel S1 kann einige Wellenlängen (der größten untersuchten Wellenlänge) länger sein als das Minimum des Weges durch den Arm mit dem rotierenden Rückstrahler RS. Der zweite genannte Fall ist der gebräuchlichere, weil dadurch am Anfang der Messung ein Interferogramm zu beiden Seiten des Symmetriepunktes des Interferogrammes (gleiche Weglänge durch beide Arme des Interferometers) gewonnen wird, welches in bekannter Weise zur Phasenkorrektur bei der Berechnung des Spektrums verwendet wird. Natürlich können die Weglängen auch so abgestimmt werden, daß ein vollständig symmetrisches Interferogramm gewonnen wird.

Entsprechend obigen Ausführungen ist daher, ohne daß ein Teil des Geräts vor- und zurückbewegt wird, eine kontinuierliche Änderung des Weges in einem Arm des Interferometers allein dadurch erreicht, daß nur eine Rotationsbewegung des Rückstrahlers RS ausgeführt wird. Bei diesem interferometrischen Meßverfahren braucht also der Spiegel nicht ständig angehalten und wieder beschleunigt zu werden, sondern er rotiert kontinuierlich. Bei dieser erfindungsgemäßen Vorrichtung ist es daher möglich, nicht nur eine technisch einfache und präzise Lagerung des zu bewegenden Spiegels mit verringertem Aufwand zu realisieren, sondern darüber hinaus ist auch der Antrieb und die (elektronische) Regelung des Spiegellaufs mit einem wesentlich geringeren Aufwand durchführbar.

Als besonderer Vorteil ist obendrein anzusehen, daß (durch die Verwendung des Rückstrahlers RS) während dessen Rotation die Spiegel S1 und SF2 ständig senkrecht zueinander bleiben (was bei dem vor- und zurückzubewegenden Spiegel S2 (Fig. 1) und dem Spiegel S1 nur mit sehr großem Aufwand realisierbar ist) ; natürlich müssen die Spiegel S1 und SF2 (Fig. 3) bzw. S1 und S2 (Fig. 1) vor Meßbetrieb senkrecht zueinander justiert werden.

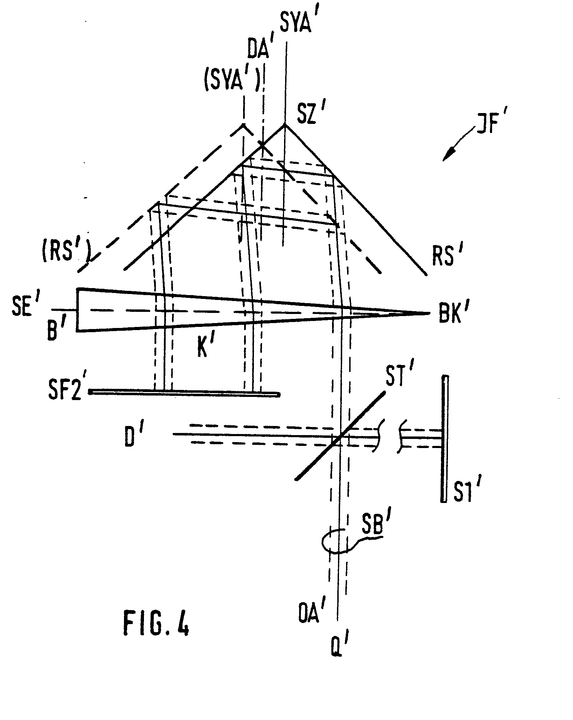

Bei einer weiteren bevorzugten Ausführungsform der Erfindung ist in Fig. 4 in Verbindung mit einem üblichen Strahlteiler ST', einem festen Planspiegel S1' und einem zweiten festen Planspiegel SF2' als beweglicher Spiegel eines Interferometers IF' ein Rückstrahler RS' beispielsweise in Form eines Tripelspiegels, eines Retroreflektors usw. verwendet ; dieser Rückstrahler RS' ist so ausgebildet, daß er mit einer vorgegebenen, gewünschten Geschwindigkeit um eine Drehachse DA' rotiert ; die Drehachse DA' des Rückstrahlers RS' verläuft parallel zur optischen Achse OA' des Interferometers IF' und ist zu dieser (OA') seitlich versetzt. Außerdem verläuft die Drehachse (DA') des Rückstrahlers RS' auch parallel zu einer Symmetrieachse SYA' des Rückstrahlers RS' und ist seitlich zu dieser (SYA') versetzt. Die Parallelität der drei Achsen DA', OA' und SYA' ist für einen einfachen Aufbau und zur Vereinfachung sowie zur Erhöhung der Übersichtlichkeit der Darstellung zweckmäßig ; sie ist aber für die Funktion des Interferometers nicht notwendig. Notwendig ist allerdings, daß die drei Achsen DA', OA' oder SYA' oder zumindest zwei von ihnen nicht zusammenfallen.

Als Element, das einen Wegunterschied erzeugt, befindet sich zwischen dem Rückstrahler RS' und dem zweiten festen Spiegel SF2' ein Keil K' (ein Prisma) aus brechendem Material, dessen Brechungsindex $n_K$ ungleich dem Brechungsindex $n_L$ ist. Dieser Keil K' ist zweckmäßigerweise so angeordnet, daß seine Symmetrieebene SE', d. h. die Ebene, welche durch seine brechende Kante BK' und deren senkrechte Projektion auf die Basisfläche B' des Keils K' oder des Prismas ausgebildet ist, senkrecht zu der Ebene liegt, welche durch die optische Achse OA' des Interferometers IF' und die Drehachse DA' des Rückstrahlers RS' aufgespannt wird, wenn beide — wie im vorliegenden Fall — parallel sind, und welche damit parallel zum zweiten festen Spiegel SF2' liegt. Bei nicht parallelem Verlauf der Achsen OA' und DA' sollte die Symmetrieebene des Keils K' senkrecht zur optischen Achse OA' des Interferometers IF' und damit parallel zum zweiten festen Spiegel SF2' liegen. Prinzipiell ist es gleichgültig, ob die brechende Kante BK', wie es in Fig. 4 der Fall ist, oder die Basisfläche des Keils K' gegenüber dem Strahlenteiler ST' liegt.

Durch eine entsprechende Anordnung der Achsen OA', DA' und SYA' und der übrigen Teile ist vor allem sicherzustellen, daß in Fig. 4 ein Strahlenbündel SB', welches von dem Strahteiler ST' aus in den Arm mit dem Keil K' und dem Rückstrahler RS' gelangt,

a) nach Verlassen des Strahlteilers ST' vollständig den Keil durchläuft,

b) vom Rückstrahler RS' seitlich versetzt zum zweiten Mal durch den Keil K' gelenkt wird, — wobei das Strahlenbündel SB' nach dem zweiten Durchgang durch den Keil wieder parallel zur optischen Achse OA' des Interferometers IF' ist, so daß die beim ersten Durchgang bewirkte Ablenkung durch den zweiten Durchgang wieder rückgängig gemacht worden ist und damit senkrecht auf den zweiten festen Spiegel auftrifft, und

c) von dort reflektiert wird, so daß das Strahlenbündel (SB') auf demselben Weg wie vom Strahlteiler ST' zum festen Spiegel SF2' nunmehr in umgekehrter Richtung vom festen Spiegel SF2' über den Rückstrahler RS' zum Strahlenteiler ST' zurückläuft. Das Strahlenbündel muß also auf dem « Hinweg » und auf dem « Rückweg » den Keil K' jeweils zweimal durchlaufen.

Nachdem der Rückstrahler RS' (beispielsweise ein Tripelspiegel) das Strahlenbündel SB' (in Bezug auf alle Seiten) seitenvertauscht reflektiert, wird durch die Anordnung und den jeweils zweimaligen Durchlauf durch den Keil K' erreicht, daß alle Teile des Strahlenbündels SB' unabhängig davon, ob es am spitz zulaufenden oder breiteren Ende des Keils K' auftrifft, dieselbe Wegstrecke durch das Keilmaterial zurücklegen ; das Strahlenbündel SB' « sieht » gewissermaßen eine planparallele Platte, die es bei vier Durchläufen durch den Keil K' insgesamt jeweils zweimal durchläuft (siehe Fig. 4 bezüglich des Strahlenbündels SB'). Außerdem bewirken jeweils die ersten beiden und die letzten beiden aufeinanderfolgenden Durchläufe durch den Keil K', daß die durch die Brechung bewirkte Ablenkung des Strahlenbündels SB' wieder rückgängig gemacht wird, so daß also auch das Strahlenbündel SB' parallel zur optischen Achse OA' und damit senkrecht auf den Spiegel SF2' auftrifft, wenn dieser richtig, d. h. senkrecht zum festen Spiegel S1' und unter 45° zum Strahlteiler ST' justiert ist, und dann wieder zu seinem Ausgangspunkt am Strahlteiler ST' zurückkehrt.

Bei einer Rotation des Rückstrahlers RS' um seine Drehachse DA' wird dieser, bezogen auf die optische Achse OA' des Interferometers IF', seitlich versetzt, wodurch das Strahlenbündel SB' natürlich auch eine Versetzung erfährt und damit die zweiten und dritten Durchgänge durch den Keil K' jeweils in Abhängigkeit von der Stellung des Rückstrahlers RS' aufgrund dessen Drehung an anderer Stelle erfolgen, so daß damit das Strahlenbündel SB' eine andere Keildicke zu durchlaufen hat. Bei der Rotation des Rückstrahlers RS', welche kontinuierlich erfolgen kann und zweckmäßigerweise kontinuierlich sein sollte, durchläuft somit das Strahlenbündel SB' in ständigem Wechsel stetig bis zu einem Maximum zunehmende und dann wieder stetig bis zu einem Minimum abnehmende Keildicken und damit entsprechend unterschiedliche optische Wege. Wegen des jeweils zweimaligen Durchlaufs durch den Keil K' « sieht » das Strahlenbündel SB' eine planparallele Platte mit periodisch sich stetig ändernden Dicken. Zwischen Maximum und Minimum bzw. zwischen Minimum und Maximum wird dann jeweils am Detektor D' eine Seite des (über Maximum-Minimum-Maximum symmetrischen) Interferogramms in herkömmlicher Weise registriert, digitalisiert und mit Hilfe einer Fourier-Transformation zum Spektrum umgerechnet.

Aus den vorstehenden Ausführungen ist anhand von Fig. 4 leicht zu ersehen, daß durch die Anordnung und Dimensionierung der Komponenten folgendes sichergestellt sein muß, daß nämlich

a) das Strahlenbündel SB' nach dem ersten Durchgang und der Ablenkung durch den Keil K' nicht wieder in sich selbst zurückgeworfen wird, d. h. die optische Achse des Strahlenbündels SB' in keiner Stellung des rotierenden Rückstrahlers RS' durch dessen Symmetriezentrum SZ' laufen darf, (wobei das Symmetriezentrum SZ' jener Punkt des Rückstrahlers RS' sein soll, der einen parallel zur Symtrieachse SYA' einfallenden Strahl in sich selbst zurückwirft) ; im Falle eines Tripelspiegels ist das Symmetriezentrum dessen Scheitelpunkt ;

b) bei paralleler Anordnung der Achsen DA', OA' und SYA' die optische Achse des Strahlenbündels SB' nach dem ersten Durchgang durch den Keil K' nicht mit der Drehachse DA' zusammenfallen darf. (Die optische Achse des Strahlenbündels SB' darf vielmehr nur mit der Drehachse DA' zusammenfallen, wenn die Drehachse DA' und die Symmetrieachse SYA' des Rückstrahlers RS' gegeneinander geneigt sind) ;

c) der verwendete Keil K' so groß ist, daß jedes vom Rückstrahler RS' reflektierte Strahlenbündel ihn durchlaufen muß ; und

d) auch der feste Spiegel SF2' so ausgedehnt ist, daß er jedes vom Rückstrahler RS' reflektierte Strahlenbündel seinerseits wieder reflektiert.

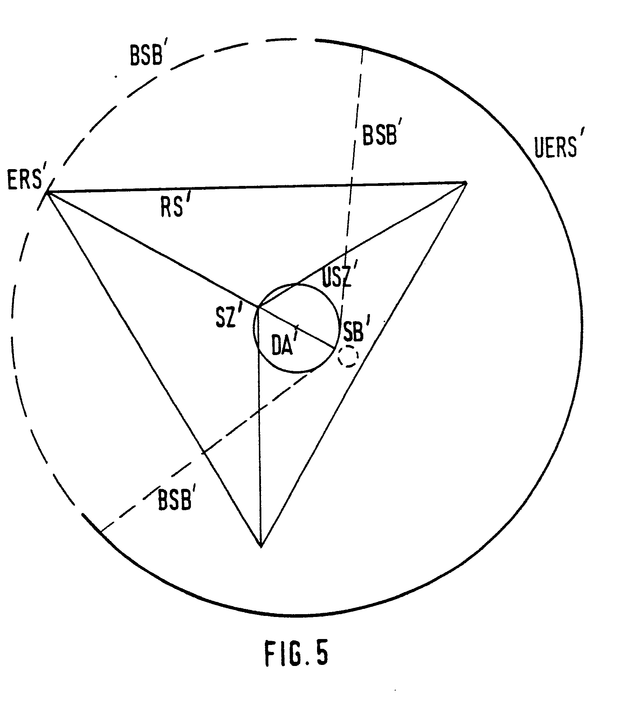

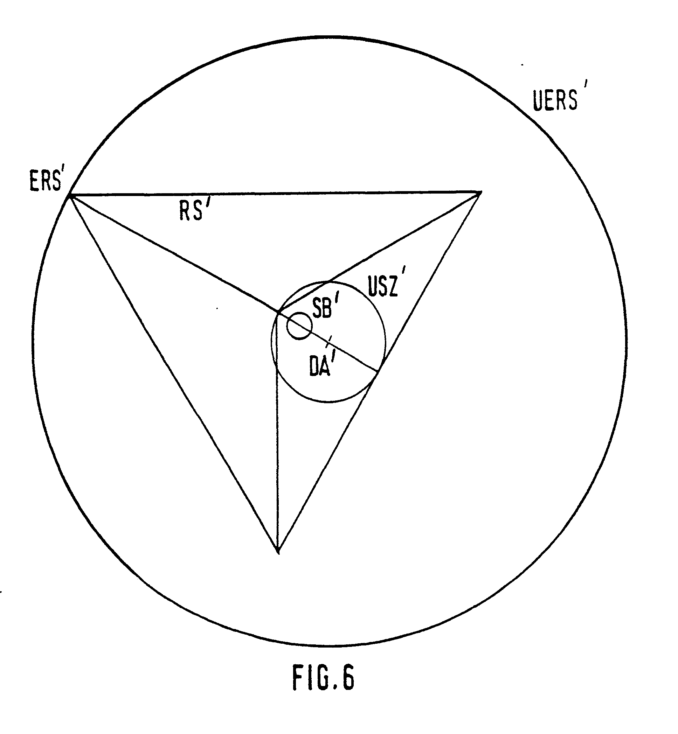

Nach dem Obigen lassen sich unter anderen zwei mögliche Konstruktionsausführungen ableiten, welche in Fig. 5 bzw. 6 in Draufsicht dargestellt sind. In Fig. 5 und 6 ist mit USZ' ein Kreis bezeichnet, auf welchem das Symmetriezentrum SZ' des Rückstrahlers RS' bei Rotation umläuft ;

mit ERS' ist eine von der Drehachse DA' am weitesten entfernt liegende Ecke des Rückstrahlers RS' und mit UERS' ist ein Kreis bezeichnet, auf dem die Ecke ERS' bei Rotation umläuft.

In Fig. 5 soll ein Strahlenbündel SB' außerhalb des Umlaufkreises USZ' des Symmetriezentrums SZ' auf den Rückstrahler RS' auftreffen. Da die Projektion jedes reflektierten Strahls beim Rückstrahler RS' (beispielsweise einem Tripelspiegel) durch dessen Symmetriezentrum SZ' läuft, ergibt sich daraus der Bereich, welchen das Strahlenbündel SB' höchstens erreichen kann, und der durch die gestrichelten Linien BSB' begrenzt ist : dieser Bereich muß also durch den zweiten festen Spiegel SF2' überdeckt werden ; außerdem muß auch der Keil K' den von den Linien BSB' begrenzten Bereich und zusätzlich außerdem auch noch den Bereich überdecken, welchen das Strahlenbündel SB' beim Eintritt überdeckt.

In Fig. 6 soll ein Strahlenbündel SB' innerhalb des Umlaufkreises USZ' des Symmetriezentrums SZ' auf den Rückstrahler RS' auftreffen. In diesem Fall läuft bei Rotation des Rückstrahlers RS' das von ihm reflektierte Strahlenbündel gewissermaßen um die Drehachse DA' und um das einfallende Bündel SB' herum. Der feste Spiegel SF2' und der Keil K' müssen also die Bereiche um das einfallende Bündel SB' herum überdecken, wobei der feste Spiegel SF2' mit einer Öffnung an der Stelle versehen sein muß, durch welche das Strahlenbündel SB' auch eintreten kann ; hierbei muß die Öffnung genau denselben Durchmesser wie das Strahlenbündel SB' haben. Die Orientierung der Basisfläche B' und der brechenden Kante BK' des Keils K' in den einzelnen Anordnungen ist prinzipiell beliebig und hat nur bei der Rotation Einfluß auf die Abhängigkeit des Maximums bzw. Minimums des optischen Wegs von der jeweiligen Stellung des Rückstrahlers.

Bei allen Ausführungsformen sind die beiden Arme des Interferometers IF', nämlich derjenige mit dem festen Spiegel S1' und derjenige mit dem rotierenden Rückstrahler RS', in bekannter Weise so aufeinander abgestimmt, daß der Weg durch die beiden Arme gleich lang ist, wenn der Weg im Arm mit dem rotierenden Rückstrahler RS' minimal ist, bzw. der Arm mit dem festen Spiegel S1' kann einige Wellenlängen, und zwar von den größten untersuchten Wellenlängen, länger sein als das Minimum des Wegs durch den Arm mit dem rotierenden Rückstrahler RS'. Der zweite genannte Fall ist der gebräuchlichere, weil dadurch am Anfang der Messung ein Interferogramm auf beiden Seiten des Symmetriepunktes des Interferometers aufgrund der gleichen Weglänge durch beide Arme des Interferometers gewonnen wird, was in bekannter Weise zur Phasenkorrektur bei der Berechnung des Spektrums verwendet wird. Die Weglängen können aber auch so abgestimmt werden, daß ein vollständig symmetrisches Interferogramm gewonnen wird.

Bei den vorstehend beschriebenen Ausführungsformen ist daher, ohne daß ein Teil des Geräts vor- und zurückbewegt wird, eine kontinuierliche Änderung des Wegs in einem Arm des Interferometers allein dadurch erreicht, daß eine Rotationsbewegung des Rückstrahlers RS' ausgeführt wird. Bei dem erfindungsgemäßen interferometrischen Meßverfahren braucht also der brechende Keil K' nicht ständig angehalten und wieder beschleunigt zu werden, sondern der Rückstrahler RS' rotiert kontinuierlich mit einer gleichmäßigen Umlaufgeschwindigkeit. Bei der erfindungsgemäßen Vorrichtung kann daher nicht nur eine technisch einfache und doch präzise Lagerung des zu bewegenden Spiegels, d. h. des in Drehung zu versetzenden Rückstrahlers RS' mit verringertem Aufwand realisiert werden, sondern darüber hinaus ist auch der Antrieb und die vorzugsweise elektronische Regelung des Spiegellaufs mit einem wesentlich geringerem Aufwand durchführbar.

Gegenüber den eingangs beschriebenen bekannten Interferometern sind die wesentlichen Vorteile der erfindungsgemäßen Interferometer darin zu sehen, daß

a) zeitlich lückenlose Messungen durchführbar sind,

b) sowohl langsame als auch insbesondere sehr schnelle Messungen durchführbar sind,

c) mit verringertem Konstruktionsaufwand ein vibrations- und schockunempfindliches Interferometer ausführbar ist,

. d) durch den geringeren Aufwand an Elektronik und Mechanik ein kompaktes, kleines Interferometer herstellbar ist, welches insbesondere zusammen mit einem geeigneten Mikroprozessor als tragbares, kompaktes Spektrometersystem ausgebildet werden kann,

e) wegen der einfachen universellen Lagerung des bewegten Spiegels in Form des rotierenden Rückstrahlers RS bzw RS' ein Betrieb des Interferometers in jeder beliebigen Lage im Raum möglich ist, und

f) bei paralleler Anordnung der drei Achsen DA', SYA', OA' in jeder Stellung des rotierenden Rückstrahlers RS' das Strahlenbündel SB' unter demselben (bzw. nahe zu demselben) Winkel auf die Rückstrahlerfläche trifft, und daß daher in jeder Stellung die von diesem bewirkte Polarisierung der Strahlung dieselbe (bzw. nahezu dieselbe) ist.

Als Material für den brechenden Keil K' können die allgemein üblichen Materialien verwendet werden ; allerdings muß der Spektralbereich der jeweiligen Anwendung berücksichtigt werden, indem beispielsweise optische Gläser im sichtbaren Bereich, CaF, KBr, Irtran, usw. im Infraroten usw. verwendet werden.

Selbstverständlich können die erfindungsgemäßen Interferometer nach Fig. 3 bis 6 auch entsprechend den in der Literatur beschriebenen Abwandlungen nach dem Michelson-Prinzip ausgebildet werden, so beispielsweise als polarisierende Interferometer. Eine Justierung des festen Spiegels, eine Wegmessung der Spiegelposition, u. ä. können in bekannter Weise auch hier durchgeführt werden, beispielsweise kann die Wegmessung durch Laser und Weißlicht mit entsprechenden Detektoren im Strahlengang oder durch Ausbildung eines entsprechenden Referenzinterferometers durchgeführt werden.

Die Art des Rückstrahlers, des Keils und des zweiten festen Spiegels, deren geometrische Abmessungen, die Neigung und der Versatz der drei Achsen sowie die Oberflächengüte der einzelnen Elemente sind in üblicher Weise an die Meßaufgabe anzupassen. Das gleiche gilt für die Spiegellagerung, die Rotationsgeschwindigkeit und die dazugehörige Elektronik. Der Keil K' sollte bezogen auf die optische Achse OA' zweckmäßigerweise (aber nicht notwendigerweise) im Minimum der Ablenkung betrieben werden.

Auch der feste Spiegel S1 bzw. S1' kann in bekannter Weise als fester Tripelspiegel (Rückstrahler) ausgebildet sein. Grundsätzlich können die erfindungsgemäßen Interferometer bei allen bisher verwendeten Interferometerverfahren eingesetzt werden, bei welchen die Änderung der Wegdifferenz in irgend einer Form durch Hin- und Herbewegen erzielt wird. Der Spiegel S1 bzw. S1' kann auch als Kombination vom Rückstrahler und festem Spiegel bzw. als Kombination eines rotierenden Rückstrahlers und eines brechenden Keils mit festem Planspiegel ausgebildet sein ; hierbei können eventuelle Abbildungsfehler kompensiert und größere Weglängendifferenzen erreicht werden. Durch Steuerung der Phase der beiden Rotationsbewegungen (der beiden Rückstrahler) zueinander läßt sich hierbei auch der Geschwindigkeitsverlauf der Weglängenänderung beeinflussen. Ferner kann die beschriebene Methode zur Konstruktion jeder anderen Art von Spektrometern verwendet werden, falls dabei sich ändernde Weglängen erforderlich sind. Generell gilt, daß der rotierende Rückstrahler entsprechend ausgewuchtet sein soll.

**Patentansprüche**

1. Interferometer nach dem Michelsonprinzip, mit einem ersten festen Planspiegel (S1), einem beweglichen Rückstrahler (RS), einem zweiten festen Planspiegel (SF2) der senkrecht zu dem ersten festen Planspiegel (S1) angeordnet ist und einem Strahlteiler (ST), dadurch gekennzeichnet, daß der bewegliche Rückstrahler (RS) rotiert, daß die Drehachse (DA) des Rückstrahlers (RS) zu dessen Symmetrieachse (SYA), bezogen auf das Symmetriezentrum (SZ), seitlich versetzt ist, und daß Drehachse (DA) und Symmetrieachse (SYA) des Rückstrahlers (RS) zueinander geneigt sind (Winkel β), daß die Drehachse des Rückstrahlers (RS) zu der optischen Achse (OA) des Interferometers seitlich so versetzt ist, daß beide Achsen sich nicht auf der spiegelnden Oberfläche des Rückstrahlers (RS) schneiden, und daß die beiden Achsen (DA, OA) zueinander geneigt sind (Winkel α).

2. Interferometer nach Anspruch 1, dadurch gekennzeichnet, daß der Rückstrahler (RS) ein Tripelspiegel, Katzenauge o. ä. ist.

3. Interferometer nach einem der Ansprüche 1 oder 2, dadurch gekennzeichnet, daß der Strahlteiler (ST), der rotierende Rückstrahler (RS) und der zweite feste Planspiegel (SF2) des Interferometers in ihren Abmessungen so ausgelegt und zueinander angeordnet sind, daß im Betrieb die gesamte, vom Strahlteiler (ST) kommende Strahlung von der einen Hälfte des Rückstrahlers (RS) aufgefangen wird, über dessen zweite Hälfte auf den zweiten festen Planspiegel (SF2) reflektiert wird, welcher sie vollständig auffängt, und die Strahlung dann von dem zweiten festen Planspiegel (SF2) auf umgekehrtem Weg wieder vollständig zum Strahlteiler (ST) zurückreflektiert wird.

4. Interferometer nach einem der Ansprüche 1 bis 3, dadurch gekennzeichnet, daß bei einer vollständigen Umdrehung des Rückstrahlers (RS) zwei halbseitige Interferogramme gewonnen werden, welche durch Fouriertransformation zwei vollständige, zeitlich aufeinanderfolgende Spektren ergeben oder aber ein vollständiges, symmetrisches Interferogramm gewonnen wird, welches ein Spektrum ergibt.

5. Interferometer nach einem der Ansprüche 1 bis 4, dadurch gekennzeichnet, daß durch die Rotation des Rückstrahlers (RS) mit dem Interferometer kontinuierliche Spektralmessungen ohne zeitliche Lücken durchführbar sind.

6. Interferometer nach einem der Ansprüche 1 bis 5, dadurch gekennzeichnet, daß die Meßgeschwindigkeit des Interferometers durch die Rotationsgeschwindigkeit des Rückstrahlers (RS) steuerbar ist, und daß bei sehr hohen Meßgeschwindigkeiten die Spektralmessungen eine hohe zeitliche Auflösung aufweisen.

7. Interferometer nach einem der Ansprüche 1 bis 6, dadurch gekennzeichnet, daß die senkrechte Justierung der beiden Planspiegel (S1, SF2) während des Meßlaufs bestehen bleibt.

8. Interferometer nach der Ansprüche 1 bis 7, dadurch gekennzeichnet, daß die zur Symmetrieachse (SYA) des Rückstrahlers (RS) geneigte Drehachse (DA) des Rückstrahlers (RS) in der Ebene bzw. parallel zu der Ebene angeordnet ist, die durch die beiden Arme des Interferometers, also durch die optische Achse in Richtung des Rückstrahlers (RS) sowie die optische Achse (OA) in Richtung des ersten festen Spiegels (S1) festgelegt ist, und daß der Neigungswinkel (α) der Drehachse (DA) zur optischen Achse (OA) gleich dem Neigungswinkel (β) der Drehachse (DA) zur Symmetrieachse (SYA) ist.

9. Interferometer nach dem Michelson-Prinzip, mit einem ersten festen Spiegel (S1'), mit einem zweiten festen Spiegel (SF2'), mit einem Strahlteiler (ST') und mit einem beweglichen Rückstrahler (RS), dadurch gekennzeichnet, daß der bewegliche Rückstrahler (RS') rotiert, wobei Drehachse (DA') und dessen Symmetrieachse (SYA') entweder parallel zueinander sind oder gegeneinander geneigt sind, so daß die beiden Achsen (DA', SYA') nicht zusammenfallen, daß keine der beiden Achsen (DA' oder SYA') mit der optischen Achse (OA') des Interferometers (IF') zusammenfällt, daß ferner eine oder beide der Achsen (DA', SYA') des Rückstrahlers (RS') gegen die optische Achse (OA') des Interferometers (IF') geneigt oder zu ihr parallel sind, daß die Drehachse (DA') durch den reflektierenden Bereich des Rückstrahlers (RS') verläuft, und daß die optische Achse (OA') des Interferometers (IF') in jeder Stellung des rotierenden Rückstrahlers (RS') auf eine reflektierende Fläche des Rückstrahlers (RS') trifft, daß ferner ein nicht bewegbarer, ortsfester Keil (K') mit einem Brechungsindex ($n_K$) vorgesehen ist, welcher ungleich dem Brechungsindex ($n_L$) von Luft ist, und daß der ortsfeste Keil (K') zwischen dem Strahlteiler (ST'), dem rotierenden Rückstrahler (RS') und dem zweiten festen Spiegel (SF2') so angeordnet ist, daß in jeder Stellung des rotierenden Rückstrahlers (RS') ein vom Strahlteiler (ST') kommendes Strahlenbündel (SB') den wie ein Prisma wirkenden Keil (K') durchläuft, dann auf den Rückstrahler (RS') auftrifft, von diesem seitlich versetzt reflektiert noch einmal an anderer Stelle den Keil (K') durchläuft und senkrecht auf den zweiten festen Spiegel (SF2') auftrifft, von diesem (SF2') reflektiert und auf demselben Weg rückwärts zum Strahlteiler (ST') durchläuft, wo es (SB') mit dem vom ersten festen Spiegel (S1') kommenden Strahlenbündel interferiert.

10. Interferometer nach Anspruch 9, dadurch gekennzeichnet, daß der Keil (K') bei Verwendung eines Tripelspiegels als Rückstrahler (RS') für jeweils zwei aufeinanderfolgende Durchgänge des Strahlenbündels wie eine planparallele Platte wirkt.

11. Interferometer nach Anspruch 9, dadurch gekennzeichnet, daß bei paralleler Anordnung der drei Achsen (DA', SYA', OA') in jeder Stellung des rotierenden Rückstrahlers (RS') die von diesem bewirkte Polarisierung der reflektierten Strahlung dieselbe ist.

## Claims

1. Interferometer, based on the principle of Michelson, comprising a first fixed plane mirror (S1) a movable retroreflector (RS), a second fixed plane mirror (SF2), which is arranged perpendicular to said first fixed plane mirror (S1), and a beamsplitter (ST), characterized in that said movable retroreflector (RS) rotates, that the axis of rotation (DA) of said retroreflector (RS) is displaced aside with respect to its axis of symmetry (SYA), relating to its center of symmetry (SZ), that said axis of rotation (DA) and said axis of symmetry (SYA) of said retroreflector (RS) are tilted to each other (angle β) ; that said axis of rotation (DA) of said retroreflector (RS) is displaced aside with respect to the optical axis (OA) of the interferometer, so that said both axes do not intersect on the reflecting surface of said retroreflector (RS), and that said both axes (DA, OA) are tilted to each other (angle α).

2. Interferometer according to claim 1, characterized in that said retroreflector (RS) is a triple reflector, a cat's eye, or a similar device.

3. Interferometer according to one of claims 1 or 2, characterized in that said beamsplitter (ST), said rotating retroreflector (RS) and said second fixed plane mirror (SF2) of the interferometer are sized in their dimensions and arranged with respect to each other in such a way that in operation, the entire radiation coming from said beamsplitter (ST) is collected by one half of said retroreflector (RS), is reflected via its other half towards said second fixed plane mirror (SF2), which collects it in its entirety and from which second fixed plane mirror (SF2) the entire radiation is reflected back to said beamsplitter (ST) on the reversed path.

4. Interferometer according to one of claims 1 to 3, characterized in that two halfsided interferograms are obtained in a complete rotation of said retroreflector whereby said interferograms yield two complete spectra consecutive in time by means of Fourier transformation or one complete, symmetric interferogram is obtained, which yields one spectrum.

5. Interferometer according to one of claims 1 to 4, characterized in that continuous spectral measurements without time gaps are to be performed by means of said interferometer through rotation of said retroreflector (RS).

6. Interferometer according to one of claims 1 to 5, characterized in that the speed of measurement of the interferometer is to be controlled by means of the speed of rotation of said retroreflector (RS), and that the spectral measurements have a high resolution in time at high speeds of measurement.

7. Interferometer according to one of claims 1 to 6, characterized in that the perpendicular alignment of said two plane mirrors (S1, SF2) is maintained.

8. Interferometer according to one of claims 1 to 7, characterized in that said axis of rotation (DA) of said retroreflector (RS) tilted with respect to said axis of symmetry (SYA) of the retroreflector (RS) is arranged in the plane, and parallel to the plane respectively, which is determined by both the arms of said interferometer, that is defined by the optical axis towards said retroreflector (RS), as well as by said optical axis (OA) towards said first fixed mirror (S1), and that the angle of inclination (α) between said axis of rotation (DA) and said optical axis (OA) ist equal to the angle of inclination (β) between said axis of rotation (DA) and said axis of symmetry (SYA).

9. Interferometer based on the principle of Michelson, comprising a first fixed mirror (S1'), a second fixed mirror (SF2'), a beamsplitter (ST') and a movable retroreflector (RS') characterized in that said movable retroreflector (RS') rotates whereby its axis of rotation (DA') and its axis of symmetry (SYA') are either parallel or inclined with respect to each other, so that said both axes (DA', SYA') do not coincide, that none of said both axes (DA' or SYA') coincides with the optical axis (OA') of said interferometer (IF') ; that one axis or said both axes (DA', SYA') of said retroreflector (RS') are either inclined to or parallel to said optical axis (OA') of said interferometer (IF') ; that said axis of rotation (DA') intersects the reflecting region of said retroreflector (RS'), and that said optical axis (OA') of said interferometer (IF') intersects the reflecting surface of said retroreflector (RS') in any position of said rotating retroreflector (RS'), that a non-movable wedge (K') with a index of refraction ($n_K$), which is different from the index of refraction ($n_L$) of air, is arranged between said beamsplitter (ST'), said rotating retroreflector (RS') and said second fixed mirror (S2') in such a way that in any (angular) position of the rotating retroreflector (RS'), a first bundle of rays (SB') coming from said beamsplitter (ST') traverses said wedge (K') acting as a prism, said bundle of rays (SB') impinges upon said retroreflector (RS'), is reflected under lateral displacement by said retroreflector (RS'), traverses said wedge (K') at a different location again, impinges perpendicular on said second fixed mirror (S2'), is reflected by said second fixed mirror (S2') and traverses back on the same way to said beamsplitter (ST'), where said bundle of rays (SB') interferes with the bundle of rays, coming from said first fixed mirror (S1').

10. Interferometer according to claim 9, characterized in that by use of a triple mirror as retroreflector (RS') said wedge (K') acts as a plane parallel plate for two consecutive passages.

11. Interferometer according to claim 9, characterized in that in parallel arrangement of said three axes (DA', SYA', OA'), the polarisation of the radiation, caused by the reflection at the retroreflector (RS') is the same in any position of said rotating retroreflector (RS').


## Revendications

1. Interféromètre selon le principe de Michelson avec un premier miroir plan fixe (S1), un réflecteur (RS) mobile, un deuxième miroir plan fixe (SF2) qui, est disposé perpendiculairement au premier miroir plan (S1) et une lame séparatrice (ST), caractérisé en ce que le réflecteur mobile (RS) tourne, que l'axe de rotation (DA) du réflecteur (RS) par rapport à son axe de symétrie (SYA), rapporté au centre de symétrie (SZ), est décalé latéralement, et que l'axe de rotation (DA) et l'axe de symétrie (SYA) du réflecteur (RS) sont inclinés l'un par rapport à l'autre (angle β), que l'axe de rotation du réflecteur (RS) est décalé latéralement par rapport à l'axe optique (OA) de l'interféromètre de telle sorte que les deux axes ne se coupent pas sur la surface supérieure formant miroir du réflecteur (RS), et que les deux axes (DA, OA) sont inclinés l'un par rapport à l'autre (angle α).

2. Interféromètre selon la revendication 1, caractérisé en ce que le réflecteur (RS) est un miroir triple, un œil de chat, ou un dispositif similaire.

3. Interféromètre selon l'une quelconque des revendications 1 et 2, caractérisé en ce que la lame séparatrice (ST), le réflecteur (RS) tournant et le deuxième miroir plan fixe (SF2) de l'interféromètre sont dimensionnés et disposés l'un par rapport à l'autre de telle façon qu'en fonctionnement le rayonnement complet venant de la lame séparatrice (ST) est capté par une première moitié du réflecteur (RS), est réfléchi par la deuxième moitié de celui-ci sur le deuxième miroir plan (SF2), qui le capte entièrement, et que le rayonnement est ensuite, à nouveau réfléchi entièrement en retour par le deuxième miroir plan fixe (SF2) selon le chemin inverse vers la lame séparatrice (ST).

4. Interféromètre selon l'une quelconque des revendications 1 à 3, caractérisé en ce que par une rotation complète du réflecteur (RS) on obtient deux interférogrammes de demi-côtés, qui par transformation de Fourier fournissent deux spectres complets, qui se suivent dans le temps ou un seul interférogramme complet symétrique qui donne un spectre.

5. Interféromètre selon l'une quelconque des revendications 1 à 4, caractérisé en ce que par la rotation du réflecteur (RS) des mesures spectrales continuelles sont réalisables avec l'interféromètre sans interruption temporelle.

6. Interféromètre selon l'une quelconque des revendications 1 à 5, caractérisé en ce que la vitesse de mesure de l'interféromètre peut être commandée par la vitesse de rotation du réflecteur (RS), et en ce que pour des vitesses de mesure très élevées, les mesures spectrales présentent une haute résolution temporelle.

7. Interféromètre selon l'une quelconque des revendications 1 à 6, caractérisé en ce que le réglage vertical des deux miroirs plans (S1, SF2) se maintient au cours des mesures.

8. Interféromètre selon l'une quelconque des revendications 1 à 7, caractérisé en ce que l'axe de rotation (DA) du réflecteur (RS) incliné par rapport à l'axe de symétrie (SYA) du réflecteur (RS) est disposé dans le plan ou parallèle au plan qui est défini par les deux bras de l'interféromètre, c'est-à-dire par l'axe optique dans la direction du réflecteur (RS) ainsi que par l'axe optique (OA) en direction du premier miroir fixe (S1), et que l'angle d'inclinaison (α) de l'axe de rotation (DA) par rapport à l'axe optique (OA) est égal à l'angle d'inclinaison (β) de l'axe de rotation (DA) par rapport à l'axe de symétrie (SYA).

9. Interféromètre selon le principe de Michelson, avec un premier miroir fixe (S1'), avec un deuxième miroir fixe (SF2'), avec une lame séparatrice (ST') et avec un réflecteur (RS') mobile, caractérisé en ce que le réflecteur mobile (RS') tourne, l'axe de rotation (DA') et son axe de symétrie (SYA') étant parallèles l'un à l'autre ou inclinés l'un par rapport à l'autre, de sorte que les deux axes (DA', SYA') ne se rencontrent pas, en ce qu'aucun des deux axes (DA' ou SYA') ne rencontre l'axe optique (OA') de l'interféromètre (IF'), en ce que de plus l'un des deux axes (DA', SYA') du réflecteur (RS') ou les deux sont inclinés par rapport à l'axe optique (OA') de l'interféromètre (IF') ou lui sont parallèles, en ce que l'axe de rotation (DA') passe par la zone réfléchissante du réflecteur (RS'), et en ce que l'axe optique (OA') de l'interféromètre (IF') rencontre dans chaque position du réflecteur (RS') tournant une surface réfléchissante du réflecteur (RS'), en ce qu'il est de plus disposé une cale (K') fixe inamovible avec un indice de réfraction ($n_K$), qui est différent de l'indice de réfraction ($n_L$) de l'air, et en ce que la cale inamovible (K') est disposée entre la lame séparatrice (ST'), le réflecteur (RS') tournant et le deuxième miroir fixe (SF2'), de façon que dans chaque position du réflecteur (RS') un faisceau de rayons (SB') venant de la lame séparatrice (ST') traverse la cale (K') qui agit comme un prisme, puis rencontre le réflecteur (RS'), après réflexion par celui-ci avec décalage latéral traverse encore une fois à un autre emplacement la cale (K') et parvient perpendiculairement sur le deuxième miroir fixe (SF2'), est réfléchi par celui-ci (SF2') et retourne par le même chemin en sens inverse vers la lame séparatrice (ST'), où (SB') interfère avec le faisceau de rayons venant du premier miroir fixe (S1').

10. Interféromètre selon la revendication 9, caractérisé en ce que la cale (K'), par l'emploi d'un miroir triple comme réflecteur (RS'), agit comme lame à faces parallèles pour deux traversées qui se suivent du faisceau de rayons.

11. Interféromètre selon la revendication 9, caractérisé en ce qu'en disposant parallèlement les trois axes (DA', SYA', OA'), la polarisation du rayonnement réfléchi réalisée par le réflecteur tournant (RS') est la même pour chaque position de ce dernier.

FIG. 1

FIG. 2

FIG. 3

FIG. 4

FIG.5

FIG.6